# EUROPEAN PATENT APPLICATION

(11) **EP 2 800 239 A1**
(43) Date of publication of application: **05.11.2014**
(21) Application number: 11878368.7
(22) Date of filing: 27.12.2011
(51) Int. Cl.: H02J 17/00

(54) **WIRELESS POWER SUPPLY APPARATUS, WIRELESS POWER SUPPLY SYSTEM, AND WIRELESS POWER SUPPLY METHOD**

(71) Applicant: Fujitsu Limited, Kawasaki-shi, Kanagawa 211-8588 (JP)
(72) Inventor: SHIMOKAWA, Satoshi, Kawasaki-shi Kanagawa 211-8588 (JP)
(74) Representative: Wilding, Frances Ward
(86) International application number: PCT/JP2011/080331
(87) International publication number: WO 2013/098975

(57) **Abstract**

A wireless power supply system includes a wireless power supply apparatus and transmission coils (6, 31, 32). The wireless power supply system may further include reception coils (7, 41, 42). The wireless power supply apparatus includes a power supplying unit, a detecting unit, and a control unit. The power supplying unit supplies electric power to a power transmission coil at a resonance frequency at which a magnetic field resonance is generated between the power transmission coil and a power reception coil. The power transmission coil sends out the electric power as magnetic field energy, using a magnetic field resonance. The detecting unit detects the phase difference of current flowing in the power transmission coil for voltage applied to the power transmission coil. The control unit switches the amount of the electric power supplied by the power supplying unit, based on the phase difference.

## Description

### TECHNICAL FIELD

The present invention relates to a wireless power supply apparatus, a wireless power supply system, and wireless power supply method.

### BACKGROUND ART

According to a conventional type of method of supplying electric power by wireless power is sent out as magnetic field energy from a power transmission coil using magnetic field resonance; and the electric power is supplied at a resonance frequency at which magnetic field resonance is generated between the power transmission coil and a power reception coil. According to another method, current flowing in a power transmission coil is detected; the coupling strength between the power transmission coil and the power reception coil is determined based on the frequency property of the detected current; whereby, the positions of the power transmission coil and the power reception coil relative to each other are optimized; and thereby, electric power transmission efficiency is improved (see, e.g., Patent Document 1).

Patent Document 1: Japanese Laid-Open Patent Publication No. 2010-239690

### DISCLOSURE OF INVENTION

### PROBLEM TO BE SOLVED BY THE INVENTION

Nonetheless, according to the conventional methods, the frequency of the electric power supplied to the power transmission coil is repeatedly swept; the coupling strength between the power transmission coil and the power reception coil is determined each time the frequency is swept; and therefore, it takes a long time to detect that the positions of the power transmission coil and the power reception coil relative to each other are suitable for the favorable electric power transmission efficiency. Therefore, for example, for a mobile object such as a car equipped with a power reception coil, when electric power is transmitted from, for example, a power transmission coil buried under the road to the mobile object in motion, the state where the electric power transmission efficiency is favorable may have actually already ended by the time the state is detected. Therefore, a problem arises in that the electric power cannot be efficiently transmitted from the power transmission coil to the power reception coil.

An object of a wireless power supply apparatus, a wireless power supply system, and a wireless power supply method disclosed herein is to efficiently transmit electric power from a power transmission coil to a power reception coil.

### MEANS FOR SOLVING PROBLEM

To solve the problem and achieve the object, the wireless power supply apparatus includes a power supplying unit, a detecting unit, and a control unit. The power supplying unit supplies electric power to a power transmission coil at a resonance frequency at which a magnetic field resonance is generated between the power transmission coil and a power reception coil. The power transmission coil sends out the electric power as magnetic field energy, using a magnetic field resonance. The detecting unit detects the phase difference of current flowing in the power transmission coil for voltage applied to the power transmission coil. The control unit switches the amount of the electric power supplied by the power supplying unit, based on the phase difference.

### EFFECT OF THE INVENTION

The wireless power supply apparatus, the wireless power supply system, and the wireless power supply method disclosed herein enable efficient transmission of electric power from a power transmission coil to a power reception coil.

### BRIEF DESCRIPTION OF DRAWINGS

FIG. 1 is a block diagram of the wireless power supply apparatus and the wireless power supply system according to a first embodiment;
FIG. 2 is a block diagram of signal flow in the wireless power supply apparatus according to the first embodiment;
FIG. 3 is a flowchart of a wireless power supply method according to the first embodiment;
FIG. 4 is a block diagram of a first example of the wireless power supply apparatus and the wireless power supply system according to the second embodiment;
FIG. 5 is a block diagram of signal flow in the first example of the wireless power supply apparatus according to the second embodiment;
FIG. 6 is a property diagram for explaining properties of coil currents in the wireless power supply system according to the second embodiment;
FIG. 7 is a waveform diagram of examples of waveforms of coil voltage and coil current in the wireless power supply system according to the second embodiment;
FIG. 8 is a property diagram of the relation between a reference value of the phase difference and electric power transmission efficiency in the wireless power supply system according to the second embodiment;
FIG. 9 is a flowchart of a first example of the wireless power supply method according to the second embodiment;
FIG. 10 is a flowchart of a second example of the wireless power supply method according to the second embodiment;
FIG. 11 is a schematic diagram of an example of an application of the wireless power supply apparatus and the wireless power supply system according to the second embodiment;
FIG. 12 is a block diagram of a second example of the wireless power supply apparatus and the wireless power supply system according to the second embodiment;
FIG. 13 is a block diagram of a third example of the wireless power supply apparatus and the wireless power supply system according to the second embodiment;
FIG. 14 is a block diagram of the wireless power supply apparatus and the wireless power supply system according to a third embodiment;
FIG. 15 is a block diagram of signal flow in the wireless power supply apparatus according to the third embodiment;
FIG. 16 is a circuit diagram of an example of a matching circuit in the wireless power supply apparatus according to the third embodiment;
FIG. 17 is a flowchart of a first example of the wireless power supply method according to the third embodiment;
FIG. 18 is a flowchart of a second example of the wireless power supply method according to the third embodiment; and
FIG. 19 is a flowchart of the second example of the wireless power supply method according to the third embodiment.

### BEST MODE(S) FOR CARRYING OUT THE INVENTION

Embodiments of a wireless power supply apparatus, a wireless power supply system, and a wireless power supply method will be described in detail with reference to the accompanying drawings. In the description of the embodiments, identical components are given identical reference numerals and redundant description is omitted. The invention is not limited by the embodiments.

(First Embodiment)

### • Description of Wireless power Supply apparatus and Wireless power Supply System

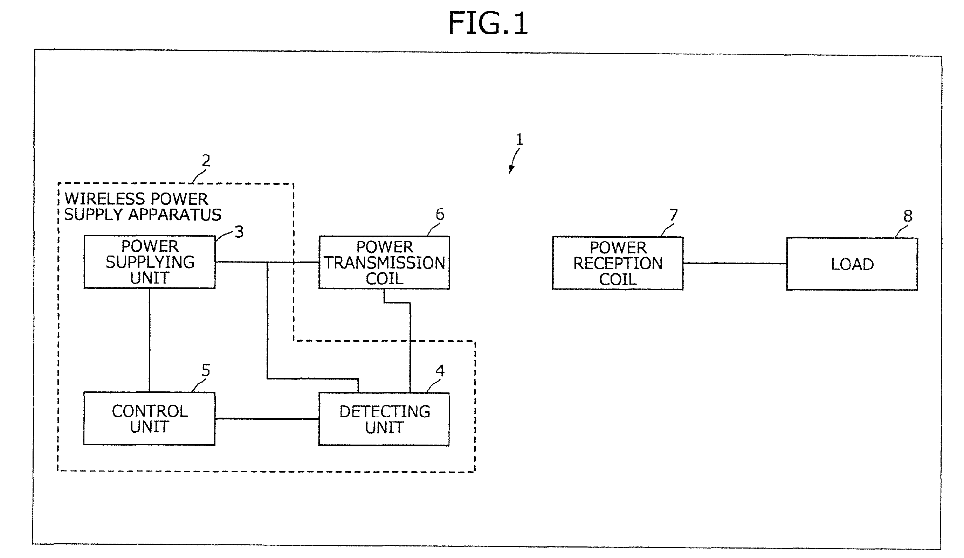

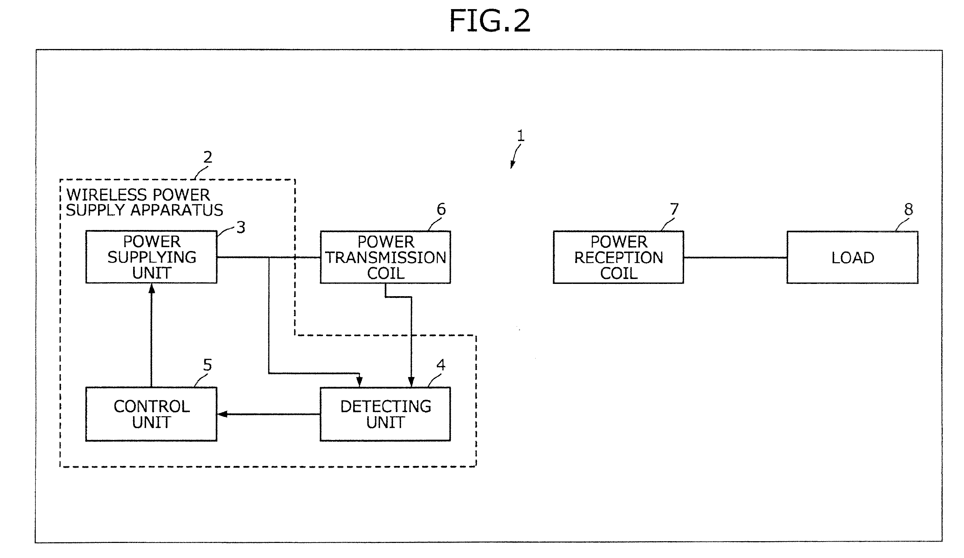

FIG. 1 is a block diagram of the wireless power supply apparatus and the wireless power supply system according to the first embodiment. FIG. 2 is a block diagram of signal flow in the wireless power supply apparatus according to the first embodiment.

As depicted in FIGs. 1 and 2, the wireless power supply system 1 includes a wireless power supply apparatus 2, and a power transmission coil 6. The wireless power supply apparatus 2 includes a power supplying unit 3, a detecting unit 4, and a control unit 5. The wireless power supply system 1 may include a power reception coil 7. The power reception coil 7 may be connected to a load 8.

The power transmission coil 6 is connected to the power supplying unit 3. The power supplying unit 3 supplies electric power to the power transmission coil 6 at a resonance frequency at which magnetic field resonance is generated between the power transmission coil 6 and the power reception coil 7. The power transmission coil 6 sends out the electric power supplied from the power supplying unit 3 as magnetic field energy using magnetic field resonance.

The detecting unit 4 is connected to the power transmission coil 6, and a node between the power supplying unit 3 and the power transmission coil 6. The detecting unit 4 receives input of a signal based on a voltage applied to the power transmission coil 6. The detecting unit 4 receives input of a signal that is based on current flowing in the power transmission coil 6. The detecting unit 4 detects the phase difference of the current flowing in the power transmission coil 6 with respect to the voltage applied to the power transmission coil 6. The phase difference of the current flowing in the power transmission coil 6 for the voltage applied to the power transmission coil 6 varies corresponding to the position of the power reception coil 7 relative to the position of the power transmission coil 6.

The control unit 5 is connected to the detecting unit 4 and receives input of a signal that is based on the phase difference detected by the detecting unit 4. The power supplying unit 3 is connected to the control unit 5. The control unit 5 switches the amount of the electric power supplied by the power supplying unit 3 to the power transmission coil 6, based on the phase difference input thereinto.

Current flows in the power reception coil 7 due to the magnetic field resonance between the power reception coil 7 and the power transmission coil 6. The load 8 consumes the electric power generated in the power reception coil 7 by the flow of the current in the power reception coil 7. The load 8 consumes the electric power transmitted from the power transmission coil 6 to the power reception coil 7.

### • Description of Wireless Power Supply Method

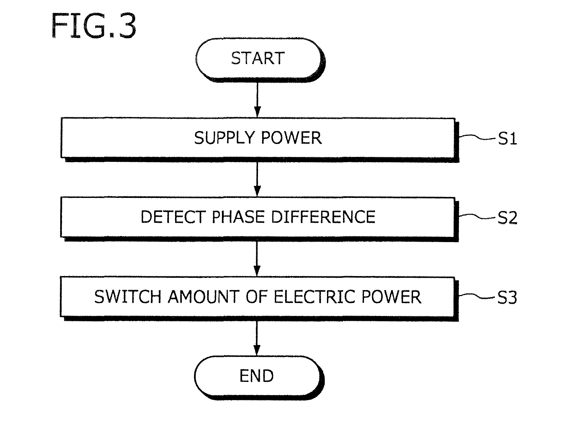

FIG. 3 is a flowchart of the wireless power supply method according to the first embodiment. As depicted in FIG. 3, in the wireless power supply system 1, when the wireless power supply apparatus 2 starts the wireless supply of the electric power, the power supplying unit 3 supplies the electric power to the transmission coil 6 at a resonance frequency at which magnetic field resonance is generated between the power transmission coil 6 and the power reception coil 7 (step S1).

The detecting unit 4 detects the phase difference of the current flowing in the power transmission coil 6 with respect to the voltage applied to the power transmission coil 6 (step S2). The control unit 5 switches the amount of the electric power supplied by the power supplying unit 3 to the power transmission coil 6, based on the phase difference detected at step S2 (step S3). The wireless power supply apparatus 2 causes the series of operations to come to an end.

According to the first embodiment, the detection of the phase difference of the current flowing in the power transmission coil 6 for the voltage applied to the power transmission coil 6 enables immediate detection of the state where the positions of the power transmission coil 6 and the power reception coil 7 relative to each other are suitable for the favorable electric power transmission efficiency. Therefore, the power supplying unit 3 supplies a small amount of electric power to the power transmission coil 6; the detecting unit 4 continuously detects the phase difference; when the detecting unit 4 detects a phase difference for favorable electric power transmission efficiency, the power supplying unit 3 supplies a large amount of electric power to the power transmission coil 6; and thereby, electric power can efficiently be transmitted from the power transmission coil 6 to the power reception coil 7.

### (Second Embodiment)

### • Description of First Example of Wireless Power Supply Apparatus and Wireless Power Supply System

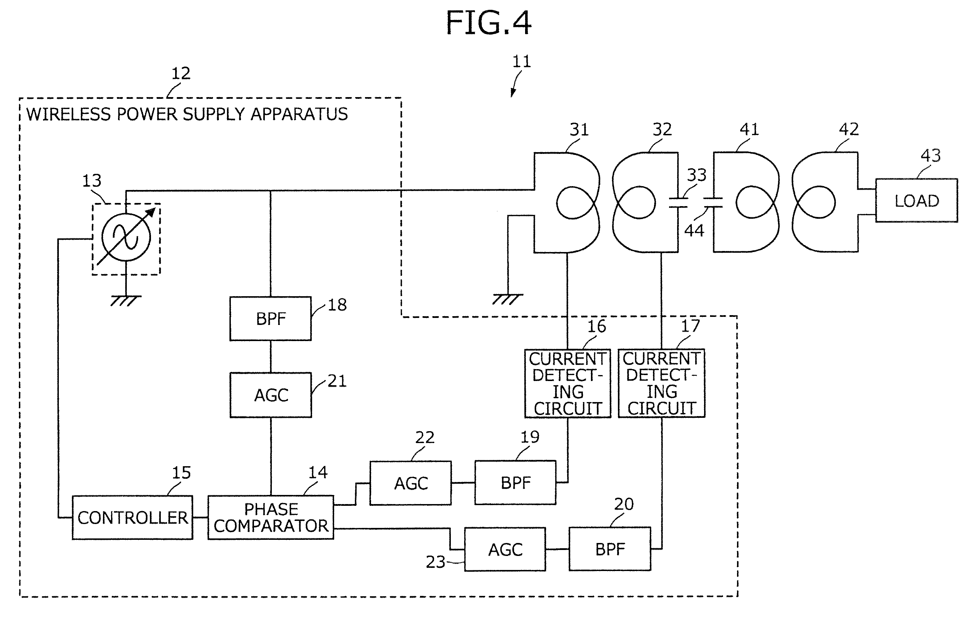

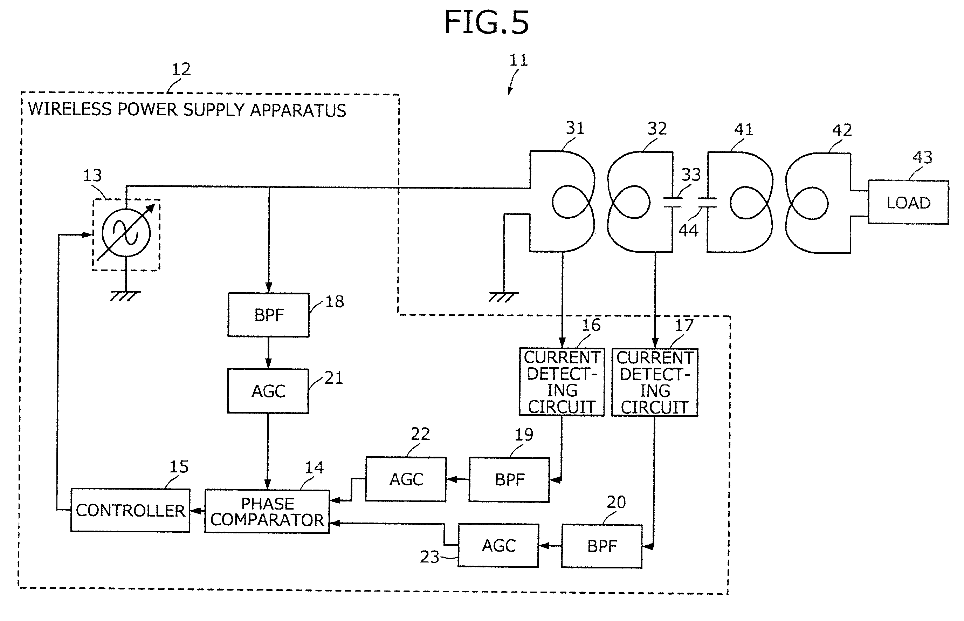

FIG. 4 is a block diagram of a first example of the wireless power supply apparatus and the wireless power supply system according to the second embodiment. FIG. 5 is a block diagram of signal flow in the first example of the wireless power supply apparatus according to the second embodiment.

As depicted in FIGs. 4 and 5, a wireless power supply system 11 includes a wireless power supply apparatus 12 and, for example, first and second coils 31 and 32 as power transmission coils; and may include, for example, third and fourth coils 41 and 42 as power reception coils. The fourth coil 42 may be connected to a load 43.

The wireless power supply apparatus 12 supplies electric power to the first coil 31, and includes for example, a power source amplifier 13 as the power supplying unit; for example, a phase comparator 14 as the detecting unit; and a controller 15 as the control unit. The wireless power supply apparatus 12 may include first and second current detecting circuits 16 and 17; first to third band-pass filters (BPFs) 18, 19, and 20; and first to third automatic gain control (AGC) circuits 21, 22, and 23.

The first coil 31 is connected to the power source amplifier 13. The power source amplifier 13 supplies electric power to the first coil 31 at a resonance frequency at which magnetic field resonance is generated between the second and the third coils 32 and 41. The power source amplifier 13 is configured for the controller 15 to be able to vary the output power of the power source amplifier 13. The energy may be transmitted from the first coil 31 to the second coil 32 using an electromagnetic induction scheme.

The second coil 32 is connected to a capacitor 33. The capacitor 33 may be an element parasitic to the second coil 32. The resonance frequency of an LC resonance coil including the second coil 32 and the capacitor 33 may be substantially equal to the frequency of the transmitted electric power. The second coil 32 sends out, for example, the electric power generated by the electromagnetic induction between the first and the second coils 31 and 32 as magnetic field energy using the magnetic field resonance.

The third coil 41 is connected to a capacitor 44. The capacitor 44 may be an element parasitic to the third coil 41. The resonance frequency of an LC resonance coil including the third coil 41 and the capacitor 44 may be substantially equal to the frequency of the transmitted electric power. Magnetic field resonance is generated in the third coil 41 by the magnetic field energy sent out from the second coil 32 and current flows in the third coil 41. Energy is transmitted from the second coil 32 to the third coil 41 by the magnetic field resonance.

The energy may be transmitted from the third coil 41 to the fourth coil 42 using an electromagnetic induction scheme. The load 43 consumes the energy, that is, the electric power transmitted to the fourth coil 42.

The first band-pass filer 18 is connected to an input terminal of the first coil 31 connected to the power source amplifier 13. The central frequency of the first band-pass filter 18 may be equal or may substantially be equal to the frequency of the transmitted electric power. The first band-pass filter 18 removes the frequency components whose frequencies are higher and lower than the frequency of the transmitted electric power.

The first automatic gain control circuit 21 is connected to the first band-pass filter 18, and adjusts the gain of a signal that passes through the first band-pass filter 18 to gain suitable for phase comparison executed by the phase comparator 14.

The first current detecting circuit 16 is connected to the first coil 31, includes an element capable of detecting current such as, for example, a Hall sensor, detects current flowing in the first coil 31, and outputs a voltage signal corresponding to the amount of the current.

The second band-pass filter 19 is connected to an output terminal of the first current detecting circuit 16. The central frequency of the second band-pass filter 19 may be equal to or may be substantially equal to the frequency of the transmitted electric power. The second band-pass filter 19 removes the frequency components whose frequencies are higher and lower than the frequency of the transmitted electric power.

The second automatic gain control circuit 22 is connected to the second band-pass filter 19, and adjusts the gain of a signal that passes through the second band-pass filter 19 to gain suitable for phase comparison executed by the phase comparator 14.

The second current detecting circuit 17 is connected to the second coil 32, includes an element capable of detecting current such as, for example, a Hall sensor, detects current flowing in the second coil 32, and outputs a voltage signal corresponding to the amount of the current.

The third band-pass filter 20 is connected to an output terminal of the second current detecting circuit 17. The central frequency of the third band-pass filter 20 may be equal to or may be substantially equal to the frequency of the transmitted electric power. The third band-pass filter 20 removes the frequency components whose frequencies are higher and lower than the frequency of the transmitted electric power.

The third automatic gain control circuit 23 is connected to the third band-pass filter 20, and adjusts the gain of a signal that passes through the third band-pass filter 20 to gain suitable for phase comparison executed by the phase comparator 14.

The phase comparator 14 is connected to the first to the third automatic gain control circuits 21, 22, and 23, receives input of output signals of the first to the third automatic gain control circuits 21, 22, and 23, detects the phase difference of the current flowing in the first coil 31 for the voltage applied to the first coil 31, and detects the phase difference of the current flowing in the second coil 32 for the voltage applied to the first coil 31.

The phase difference of the current flowing in each of the first and the second coils 31 and 32 for the voltage applied to the first coil 31 varies corresponding to the position of the third coil 41 relative to that of the second coil 32. The phase comparator 14 may detect the phase difference between, for example, two signals based on a time difference between the zero-crossing points at which the two signals cross the zero point.

The controller 15 is connected to the phase comparator 14; and may be implemented by, for example, executing on a processor, a program that implements the wireless power supply method described later, or may be configured by hardware. In this embodiment, the description will be made assuming that the controller 15 is implemented by the processor and the program implementing the wireless power supply method.

The controller 15 receives input of a signal based on the phase difference detected by the phase comparator 14; compares the signal based on the phase difference of the current flowing in the first coil 31 for the voltage applied to the first coil 31, with a reference value set in advance for the first coil 31; compares the signal based on the phase difference of the current flowing in the second coil 32 for the voltage applied to the first coil 31, with a reference value set in advance for the second coil 32; and switches the amount of the electric power supplied by the power source amplifier 13 to the first coil 31 based on the results of the comparisons.

The reference values for the phase differences used in the comparisons may be set based on, for example, the electric power transmission efficiency. The relation between the reference values for the phase differences and the electric power transmission efficiency will be described later. The reference values for the phase differences used in the comparisons may be stored in memory (not depicted) incorporated in the controller 15 or external memory (not depicted). The program implementing the wireless power supply method may also be stored in memory incorporated in the controller or external memory.

The power source amplifier 13 is connected to the controller 15; receives from the controller 15, input of a control signal for switching output power; and switches the amount of the electric power supplied to the first coil 31 based on the control signal.

### • Properties of Currents Flowing in Coils

It is known that, when two coils are coupled using a magnetic field resonance scheme, the frequency properties of the currents flowing in the coils differ from each other corresponding to the coupling strength between the two coils. For example, when the coupling strength between the two coils is strong (strong coupling state), a double-peak response (peak split) appears and, when the coupling strength between the two coils is weak (weak coupling state), a single-peak response appears (see, e.g., Patent Document 1).

The strong and the weak coupling states are each defined in Patent Document 1. According to the definitions, for example, representing the energy loss of the second coil 32 per unit time as "G1" and the energy loss of the third coil 41 per unit time as "G2" and assuming for convenience that the energy loss properties of the two coils are equal, G1 and G2 are [G=G1=G2]. Representing the amount of the energy flow per unit time (the coupling strength between the second and the third coils 32 and 41) as "K", a case where [K/G] is greater than one is defined as a "strong coupling state" and a case where [K/G] is less than one is defined as a "weak coupling state". In this embodiment, these definitions are used as an example.

The coupling state of the second and the third coils 32 and 41 varies corresponding to the positions of the second and the third coils 32 and 41 relative to each other. For example, the strength of the coupling state becomes weaker as the amount of displacement of the axes of the second and the third coils 32 and 41 becomes larger, and becomes stronger as the amount of displacement of the axes of the second and the third coils 32 and 41 becomes smaller.

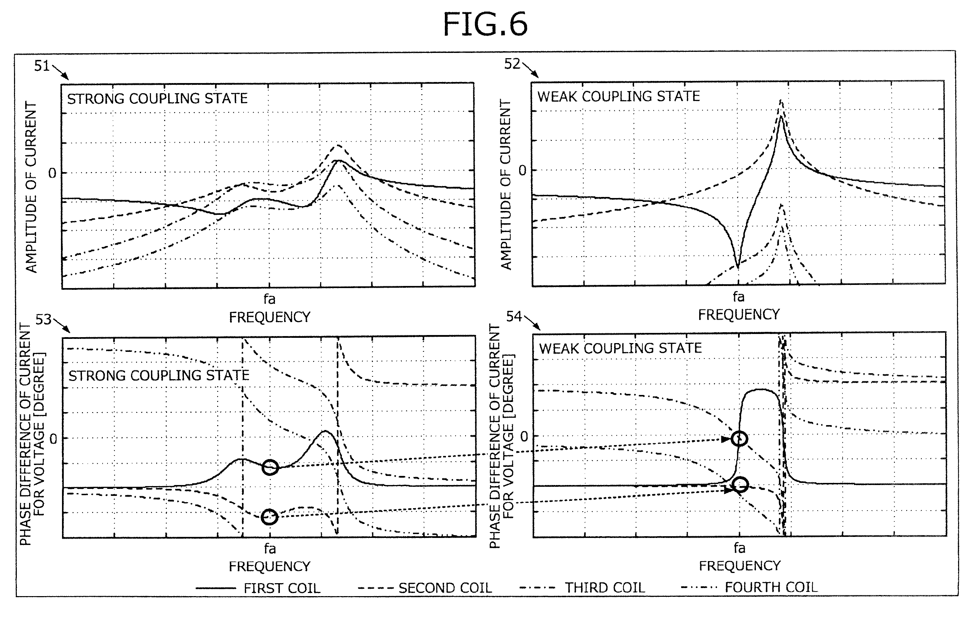

FIG. 6 is a property diagram for explaining properties of the coil currents in the wireless power supply system according to the second embodiment. In FIG. 6, a property diagram denoted by a reference numeral "51" depicts the frequency properties of the amplitudes of the current flowing in the first to the fourth coils 31, 32, 41, and 42 in a strong coupling state. As depicted in the property diagram 51, in a strong coupling state, a double-peak response appears for each of the first to the fourth coils 31, 32, 41, and 42.

In FIG. 6, a property diagram denoted by a reference numeral "52" depicts the frequency properties of the amplitudes of the current flowing in the first to the fourth coils 31, 32, 41, and 42 in a weak coupling state. As depicted in the property diagram 52, in a weak coupling state, a single-peak response appears for each of the first to the fourth coils 31, 32, 41, and 42.

In FIG. 6, a property diagram denoted by a reference numeral "53" depicts the frequency properties of the phase differences of the current flowing in the first to the fourth coils 31, 32, 41, and 42 for the voltage applied to the first coil 31 in the strong coupling state. In FIG. 6, a property diagram denoted by a reference numeral "54" depicts the frequency properties of the phase differences of the current flowing in the first to the fourth coils 31, 32, 41, and 42 for the voltage applied to the first coil 31 in the weak coupling state.

In the property diagrams 53 and 54, the phase differences of the transmitted electric power at a frequency fa continuously vary with the strength of the coupling state of the second and the third coils 32 and 41 as presented by the correspondence relations each indicated by two circles and an arrow with a dotted line. Therefore, the detection of the phase difference(s) of the current flowing in one or both of the first and the second coils 31 and 32 for the voltage applied to the first coil 31 enables the determination of the strength of the coupling state of the second and the third coils 32 and 41.

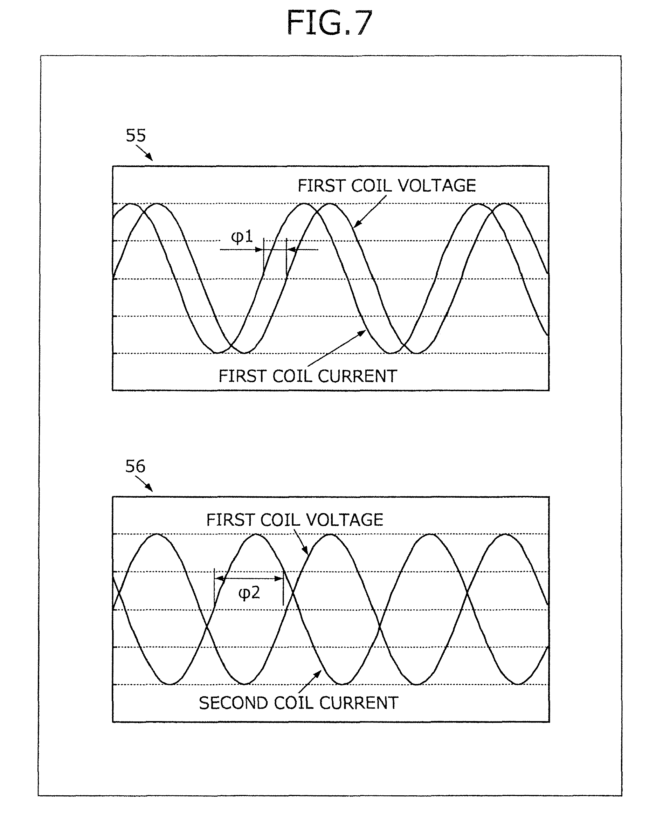

FIG. 7 is a waveform diagram of examples of waveforms of the coil voltage and the coil current in the wireless power supply system according to the second embodiment. The amplitudes of the waveforms are normalized to be depicted therein. In FIG. 7, a waveform diagram denoted by a reference numeral "55" depicts the waveforms of the voltage applied to the first coil 31 (first coil voltage) and the current flowing in the first coil 31 (first coil current). The waveform of the first coil current is a waveform acquired by displacing the waveform of the first coil voltage by a phase difference "φ1".

In FIG. 7, a waveform diagram denoted by a reference numeral "56" depicts the waveforms of the voltage applied to the first coil 31 (first coil voltage) and the current flowing in the second coil 32 (second coil current). The waveform of the second coil current is a waveform acquired by displacing the waveform of the first coil voltage by a phase difference "φ2". As described, the phase differences "φ1" and "φ2" continuously vary and with the strength of the coupling state of the second coil 32 and the third coil 41.

### • Relation Between Reference Value of Phase Difference, and Electric Power Transmission Efficiency

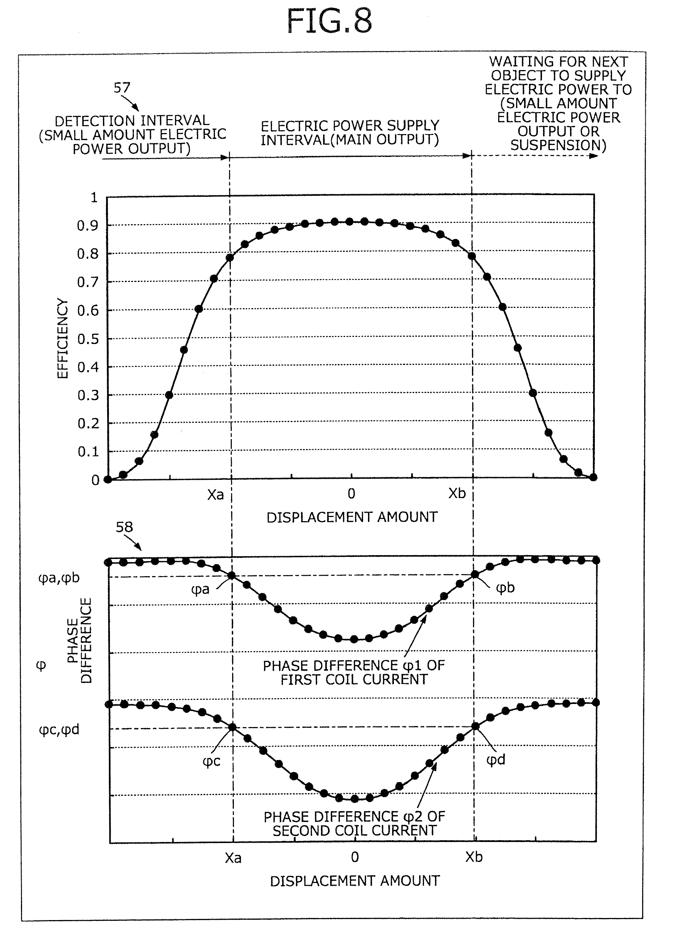

FIG. 8 is a property diagram of the relation between the reference value of the phase difference and the electric power transmission efficiency in the wireless power supply system according to the second embodiment. In FIG. 8, a property diagram denoted by a reference numeral "57" depicts the result of a simulation of the electric power transmission efficiency for the displacement amount between the axes of the second and the third coils 32 and 41. The electric power transmission efficiency is a rate of the electric power consumed by the load 43 to the electric power input into the first coil 31.

In FIG. 8, a property diagram denoted by a reference numeral "58" depicts the result of a simulation of the phase differences φ1 and φ2 of the first and the second coil currents against the displacement amount of the axes of the second and the third coils 32 and 41. In these property diagrams 57 and 58, when the positions of the axes of the second and the third coils 32 and 41 match each other, the displacement amount is zero.

Although not especially limited, as depicted in the example of the property diagram 57, an interval spanning to a point at which the electric power transmission efficiency reaches, for example, 0.8 may be referred to as "detection interval"; an interval in which the electric power transmission efficiency is equal to or higher than, for example, 0.8 may be referred to as "electric power supply interval"; and an interval in which the electric power transmission efficiency decreases from, for example, 0.8 may be referred to as "interval to wait for the next object to supply the electric power to". Such values of the electric power transmission efficiency may be equal to or may be different from each other as that for the time when the detection interval transitions to the electric power supply interval, and that for the time when the electric power supply interval transitions to the "interval to wait for the next object to supply the electric power to". In this embodiment, the description will be made assuming that the values are equal to each other.

In the detection interval, the output of the power source amplifier 13 may be controlled to be a small amount of electric power. The small amount of electric power in the detection interval may be a slight amount of electric power that is substantially an amount which the phase difference φ1 or φ2 of the first or the second coil current can be detected. In the electric power supply interval, the output of the power source amplifier 13 is the main output and may be controlled to be an amount of electric power greater than that in the detection interval. The amount of the electric power of the main output may be an amount of electric power sufficient to be supplied to the load 43.

The "interval to wait for the next object to supply the electric power to" is an interval in which the next object to supply the electric power to is waited for to approach. In the interval to wait for the next object to supply the electric power to, the output of the power source amplifier 13 may be controlled to be a small amount of electric power or may be suspended. When the output is controlled to be the small amount of electric power in the interval to wait for the next object to supply the electric power to, the output may be controlled to be a slight amount of electric power that is substantially an amount with which the phase difference φ1 or φ2 of the first or the second coil current can be detected.

From the property diagram 57, the displacement amount Xa of the axes of the second and the third coils 32 and 41 is acquired for the time when the detection interval transitions to the electric power supply interval; and the displacement amount Xb of the axes of the second and the third coils 32 and 41 is acquired for the time when the electric power supply interval transitions to the interval to wait for the next object to supply the electric power to.

From the property diagram 58, a value φa of the phase difference φ1 of the first coil current corresponding to the displacement amount Xa is acquired as a first reference value for the first coil current; a value φb of the phase difference φ1 of the first coil current corresponding to the displacement amount Xb is acquired as a second reference value for the first coil current; a value φc of the phase difference φ2 of the second coil current corresponding to the displacement amount Xa is acquired as a first reference value for the second coil current; and a value φd of the phase difference φ2 of the second coil current corresponding to the displacement amount Xb is acquired as a second reference value for the second coil current.

The first and the second reference values φa and φb for the first coil current may be equal to or may be different from each other. In this embodiment, description will be made assuming that these values are equal to each other. The first and the second reference values φc and φd for the second coil current may be equal to or may be different from each other. In this embodiment, description will be made assuming that these values are equal to each other.

### • Description of First Example of Wireless Power Supply Method

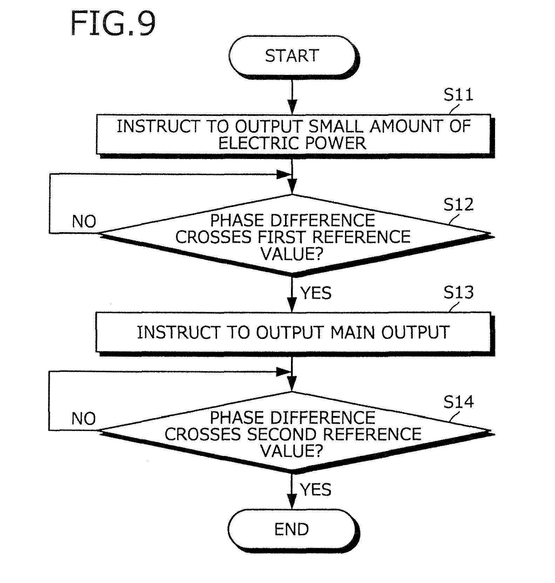

FIG. 9 is a flowchart of a first example of the wireless power supply method according to the second embodiment. As depicted in FIG. 9, when the wireless power supply apparatus 12 starts the wireless power supply process, the controller 15 instructs the power source amplifier 13 to output a small amount of electric power (step S11). Thereby, the power source amplifier 13 outputs a small amount of electric power to the first coil 31. The wireless power supply apparatus 12 starts detecting the phase differences φ1 and φ2 of the first and the second coil currents.

The controller 15 stands by until the phase difference φ1 of the first coil current crosses the first reference value φa for the first coil current or the phase difference φ2 of the second coil current crosses the first reference value φc for the second coil current (step S12: NO). When the phase difference φ1 of the first coil current crosses the first reference value φa for the first coil current or the phase difference φ2 of the second coil current crosses the first reference value φc for the second coil current (step S12: YES), the controller 15 instructs the power source amplifier 13 to output the main output (step S13). Thereby, the power source amplifier 13 outputs electric power at the main output, that is, the large amount of electric power to the first coil 31.

The controller 15 stands by until the phase difference φ1 of the first coil current crosses the second reference value φb for the first coil current or the phase difference φ2 of the second coil current crosses the second reference value φd for the second coil current (step S14: NO). When the phase difference φ1 of the first coil current crosses the second reference value φb for the first coil current or the phase difference φ2 of the second coil current crosses the second reference value φd for the second coil current (step S14: YES), the controller 15 causes the series of operations to come to an end.

### • Description of Second Example of Wireless Power Supply Method

In a second example, the output of the power source amplifier 13 is suspended immediately after the start of the wireless power supply process; approach of a mobile object to the second coil 32 is detected to be substantially close enough to enable the second coil 32 to detect the phase difference; and thereby, the power source amplifier 13 starts the output of the small amount of electric power. Therefore, although not depicted, the wireless power supply system 11 is provided with an external sensor to detect that the mobile object approaches the second coil 32 and a communication system to notify the controller 15 of the detection.

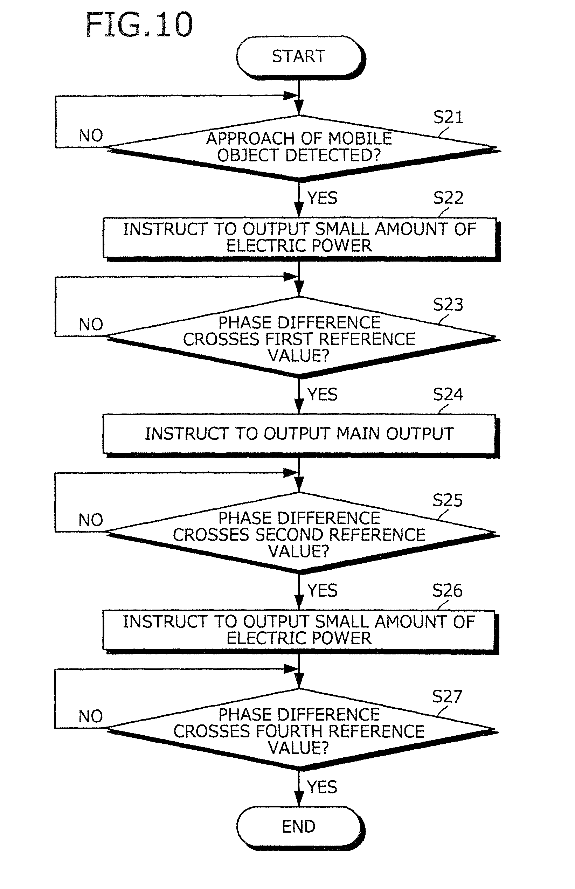

FIG. 10 is a flowchart of a second example of the wireless power supply method according to the second embodiment. As depicted in FIG. 10, after the wireless power supply apparatus 12 starts the wireless power supply process, the wireless power supply apparatus 12 stands by until the external sensor detects that a mobile object approaches thereto (step S21: NO). When the external sensor detects that a mobile object is approaching (step S21: YES), the controller 15 executes the operations at steps S11 to S14 (steps S22 to S25).

When the phase difference φ1 of the first coil current crosses the second reference value φb for the first coil current, or the phase difference φ2 of the second coil current crosses the second reference value φd for the second coil current (step S25: YES), the controller 15 instructs the power source amplifier 13 to output a small amount of electric power (step S26). Thereby, the power source amplifier 13 outputs a small amount of electric power to the first coil 31. The wireless power supply apparatus 12 continues detecting the phase differences φ1 and φ2 of the first and the second coil currents.

The wireless power supply apparatus 12 stands by until the phase difference φ1 of the first coil current crosses the fourth reference value for the first coil current, or the phase difference φ2 of the second coil current crosses the fourth reference value for the second coil current (step S27: NO). The fourth reference value is the reference value to suspend the output of the small amount of electric power of the power source amplifier 13 and may be, for example, a value of the phase difference corresponding to a value lower than the value of the electric power transmission efficiency acquired when the detection interval transitions to the electric power supply interval. The fourth reference value may be stored in memory incorporated in the controller 15 or external memory.

When the phase difference φ1 of the first coil current crosses the fourth reference value for the first coil current or the phase difference φ2 of the second coil current crosses the fourth reference value for the second coil current (step S27: YES), the controller 15 instructs, for example, the power source amplifier 13 to suspend the output of the small amount of electric power and causes the series of operations to come to an end. After the series of operations come to an end, the suspension of the output of the power source amplifier 13 is maintained until the external sensor detects that the next mobile object to supply the electric power to is approaching.

### • Example of Application of Wireless Power Supply Apparatus and Wireless Power Supply System

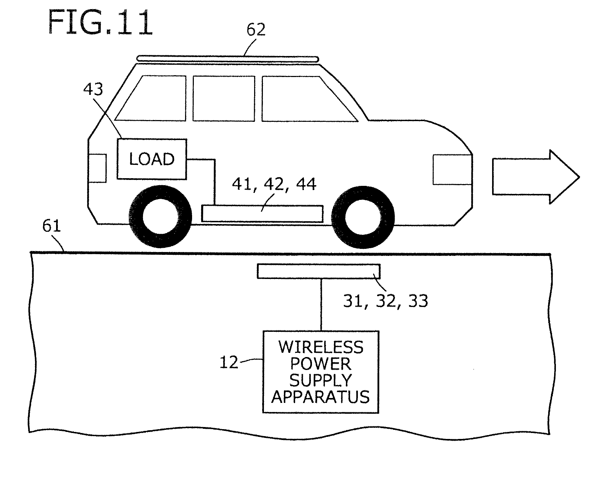

FIG. 11 is a schematic diagram of an example of an application of the wireless power supply apparatus and the wireless power supply system according to the second embodiment. The example depicted in FIG. 11 is an example where the wireless power supply apparatus and the wireless power supply system are applied to a system that charges a battery of a mobile object such as a car.

As depicted in FIG. 11, for example, the wireless power supply apparatus 12, the first and the second coils 31 and 32, and the capacitor 33 may be buried under a road 61. The third and the fourth coils 41 and 42, the load 43, and the capacitor 44 may be equipped on a mobile object 62. The load 43 may be a battery that supplies electric power to, for example, a motor (not depicted) that moves the mobile object 62.

In addition to the example of application to charge the battery of the mobile object such as a car, the wireless power supply apparatus and the wireless power supply system are also applicable to charging of a mobile terminal such as a mobile phone or a smartphone, and the supply of electric power to a mobile terminal or a home appliance. In a line for an inspection step in a factory of a manufacturer, a power reception system may be provided on a wheeled platform that moves on the line and that is mounted thereon with a product to be inspected; and a power transmission system may be provided under the line. In the line configured as above, when the product is inspected, the power transmission system can supply electric power to the power reception system and the power reception system can supply the electric power to the product.

### • Description of Second Example of Wireless Power Supply apparatus and Wireless Power Supply System

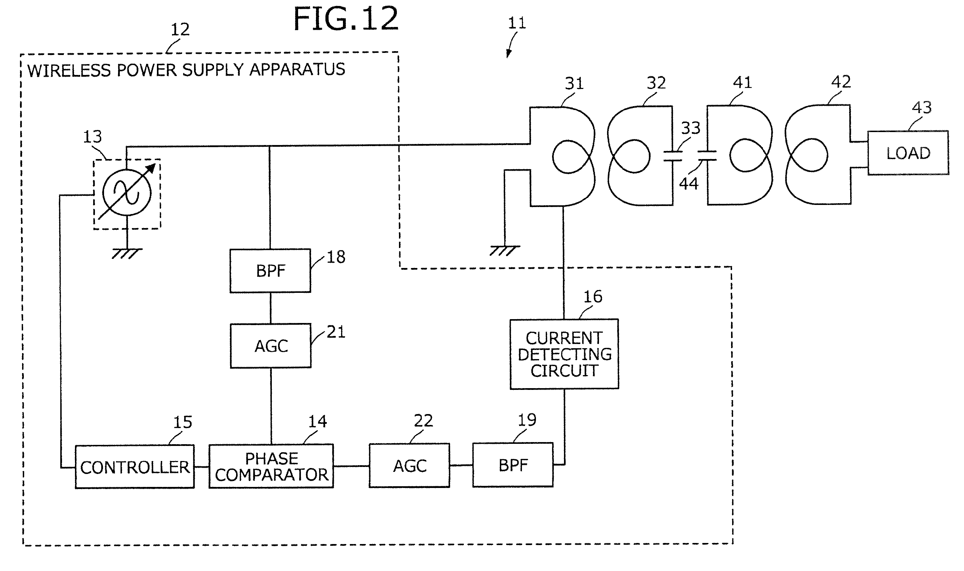

FIG. 12 is a block diagram of a second example of the wireless power supply apparatus and the wireless power supply system according to the second embodiment. As depicted in FIG. 12, the second example is an example where the phase difference of the current flowing in the first coil 31 for the voltage applied to the first coil 31 is detected and the output of the power source amplifier 13 is switched based on the phase difference. Therefore, in this example, the second current detecting circuit 17, the third band-pass filter 20, and the third automatic gain control circuit 23 (see FIG. 4) may be omitted.

### • Description of Third Example of Wireless Power Supply apparatus and Wireless Power Supply System

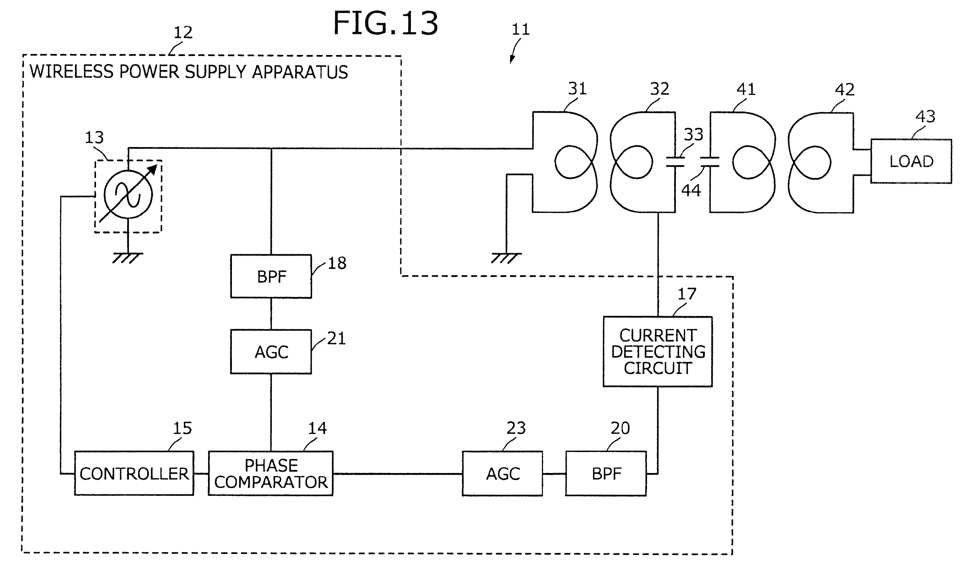

FIG. 13 is a block diagram of a third example of the wireless power supply apparatus and the wireless power supply system according to the second embodiment. As depicted in FIG. 13, the third example is an example where the phase difference of the current flowing in the second coil 32 for the voltage applied to the first coil 31 is detected and the output of the power source amplifier 13 is switched based on the phase difference. Therefore, in this example, the first current detecting circuit 16, the second band-pass filter 19, and the second automatic gain control circuit 22 (see FIG. 4) may be omitted.

According to the second embodiment, the detection of the phase difference(s) of the current flowing in one or both of the first and the second coils 31 and 32 for the voltage applied to the first coil 31 enables immediate detection of the state where the positions of the second and the third coils 32 and 41 relative to each other are suitable for favorable electric power transmission efficiency. Therefore, the power source amplifier 13 supplies a small amount of electric power to the first coil 31; the phase comparator 14 continuously detects the phase difference; when the phase comparator 14 detects a phase difference for favorable electric power transmission efficiency, the power source amplifier 13 supplies a large amount of electric power to the first coil 31; and thereby, the electric power can be transmitted efficiently from the second coil 32 to the third coil 41.

According to the second embodiment, the electric power is transmitted as the main output when the electric power transmission efficiency is high, and the output is set to be a small amount of electric power when the electric power transmission efficiency is low; and thereby, energy-saving can be facilitated and unnecessary electromagnetic radiation can be suppressed. Detection of the timing to start the output of the small amount of electric power using the external sensor enables facilitation of further energy-saving.

For a configuration to detect a state where the positions of the second and the third coils 32 and 41 relative to each other are suitable for favorable electric power transmission efficiency, based on the amplitude of the current flowing in one or both of the first and the second coils 31 and 32, the amount of electric power supplied to the first coil 31 is switched and therefore, the state cannot be stably detected. In contrast, according to the second embodiment, a state where the positions of the second and the third coils 32 and 41 relative to each other are suitable for favorable electric power transmission efficiency is detected based on the phase difference and therefore, the state can stably be detected even when the amount of the electric power supplied to the first coil 31 is switched.

According to the second embodiment, the band-pass filters 18, 19, and 20 and the automatic gain control circuit 21, 22, and 23 execute waveform processing and thereafter, the phase comparator 14 detects the phase difference. Therefore, the signal to noise ratio (S/N ratio) is improved for the detection of the phase difference. The central frequencies of the band-pass filters 18, 19, and 20 are equal or substantially equal to the frequency of the transmitted electric power and thereby, the S/N ratio is further improved.

### (Third Embodiment)

### • Description of Wireless Power Supply Apparatus and Wireless Power Supply System

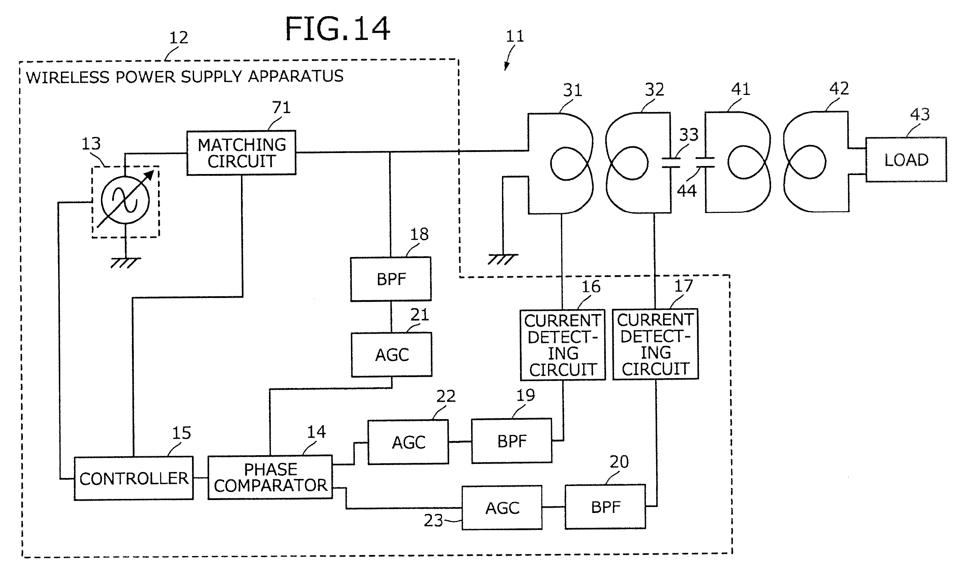

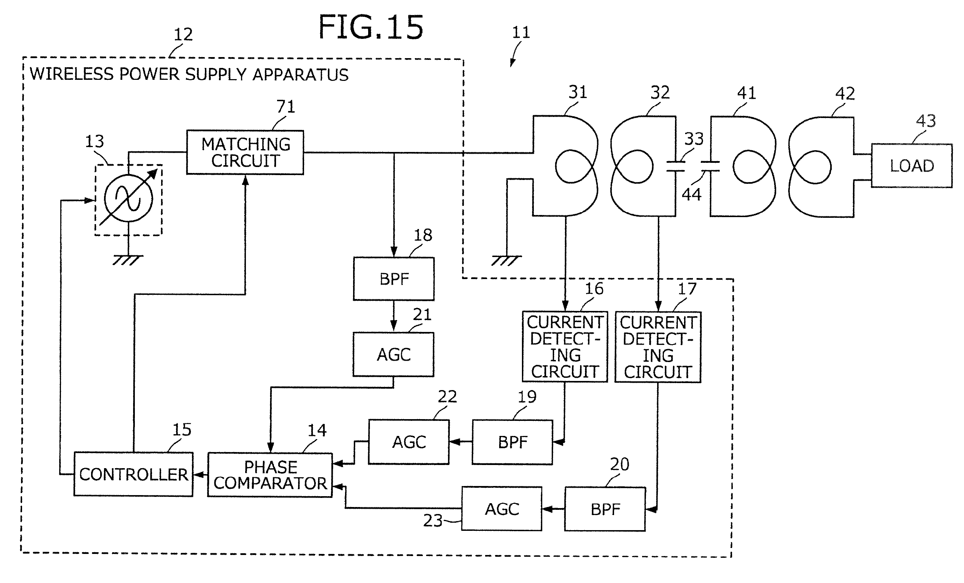

FIG. 14 is a block diagram of the wireless power supply apparatus and the wireless power supply system according to a third embodiment. FIG. 15 is a block diagram of signal flow in the wireless power supply apparatus according to the third embodiment.

As depicted in FIGs. 14 and 15, in the third embodiment, a matching circuit 71 executing impedance matching is connected between the power source amplifier 13 and the first coil 31. The matching circuit 71 is connected to the controller 15 and is configured to be able to establish the impedance matching according to the control of the controller 15.

### • Description of Example of Matching Circuit

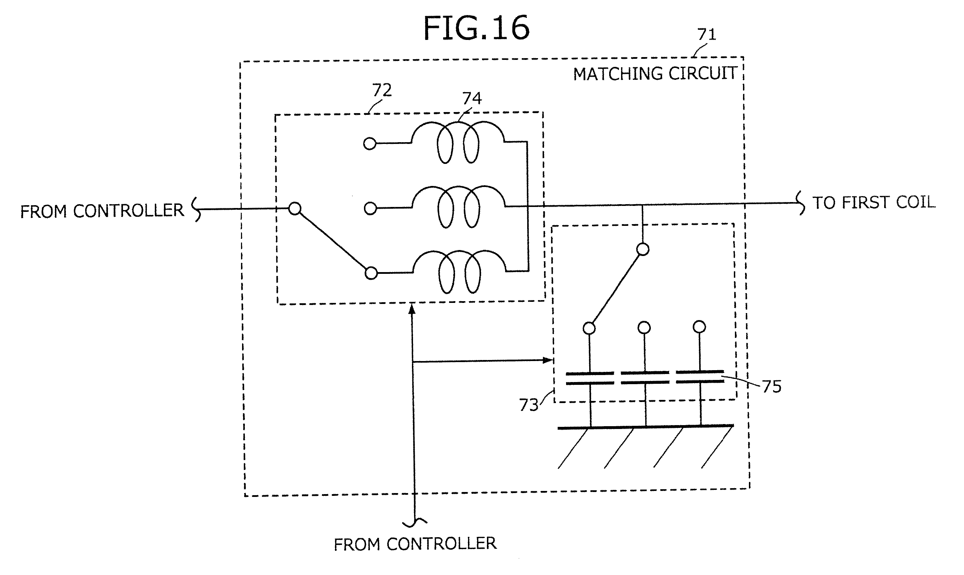

FIG. 16 is a circuit diagram of an example of the matching circuit in the wireless power supply apparatus according to the third embodiment. As depicted in FIG. 16, the matching circuit 71 includes an inductor switching switch 72 and a capacitor switching switch 73.

The inductor switching switch 72 includes plural inductors 74 that are switched between for connection to the first coil 31, according to a control signal from the controller 15. The capacitor switching switch 73 includes plural capacitors 75, and the capacitors 75 are switched between to be connected to the first coil 31, according to a control signal from the controller 15.

The controller 15 changes the combination of the inductor 74 and the capacitor 75 of the matching circuit 71, based on the phase differences φ1 and φ2 of the first and the second coil currents. The change of the combination of the inductor 74 and the capacitor 75 causes the matching circuit 71 to discretely execute impedance matching. For example, linear variation of the capacity of the capacitor 75 may cause the matching circuit 71 to continuously execute impedance matching.

### • Description of First Example of Wireless Power Supply Method

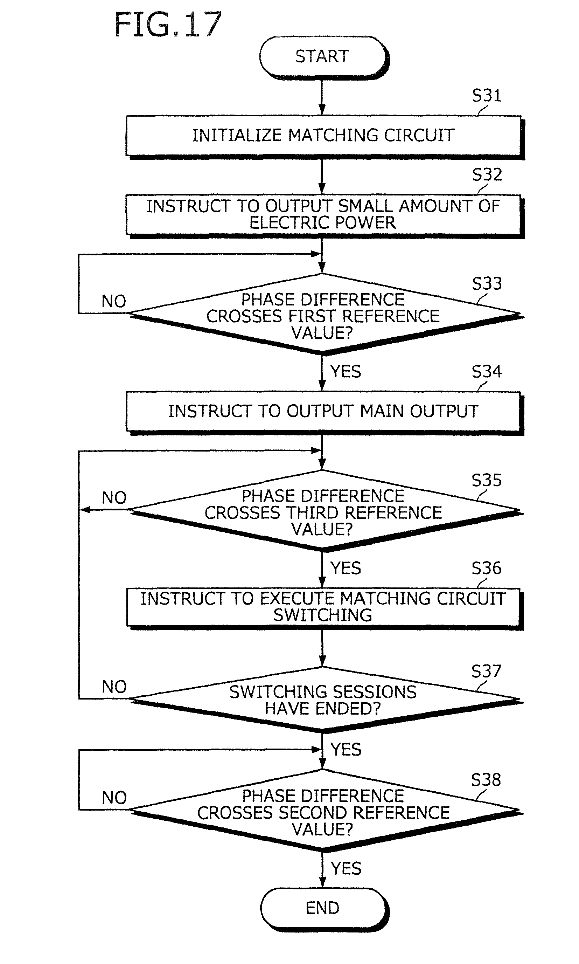

FIG. 17 is a flowchart of a first example of the wireless power supply method according to the third embodiment. As depicted in FIG. 17, when the wireless power supply apparatus 12 starts the wireless power supply process, the controller 15 initializes the matching circuit 71 (step S31). The combination of the inductor 74 and the capacitor 75 in the initial state of the matching circuit 71 is determined in advance.

The controller 15 executes the operations at steps S11 to S13 (step S32 to S34) and stands by until the phase difference φ1 of the first coil current crosses a third reference value for the first coil current or the phase difference φ2 of the second coil current crosses a third reference value for the second coil current (step S35: NO).

The third reference values are reference values each to establish the impedance matching by switching executed by the matching circuit 71, and are each set, for example, for the number of switching sessions executed between the first and the second reference values by the matching circuit 71. For example, when the matching circuit 71 switches among nine combinations of the inductor 74 and the capacitor 75, eight third reference values may be set between the first and the second reference values. The third reference values may be stored in the memory incorporated in the controller 15 or the external memory.

When the phase difference φ1 of the first coil current crosses the third reference value for the first coil current or the phase difference φ2 of the second coil current crosses the third reference value for the second coil current (step S35: YES), the controller 15 instructs the matching circuit 71 to execute switching (step S36). Thereby, the matching circuit 71 switches the combination of the inductor 74 and the capacitor 75.

For the combinations of the inductor 74 and the capacitor 75, it may be determined in advance which one of the combinations such as a first combination, a second combination, a third combination, etc., includes which one of the inductors 74 and which one of the capacitors 75. The switching may be sequentially executed starting with the first combination each time the controller 15 issues a switching instruction. In this case, the first combination may be the combination in the initialized state at step S31.

Until the time when the switching sessions executed by the matching circuit 71 for the number set in advance come to an end (step S37: NO), the controller 15 establishes the impedance matching corresponding to the phase difference φ1 or φ2 of the first or the second coil current by repeating the execution of the operations at steps S35 to S37. When the switching sessions executed by the matching circuit 71 for the number set in advance come to an end (step S37: YES), the controller 15 stands by until the phase difference φ1 of the first coil current crosses the second reference value φb for the first coil current, or the phase difference φ2 of the second coil current crosses the second reference value φd for the second coil current (step S38: NO). When the phase difference φ1 of the first coil current crosses the second reference value φb for the first coil current, or the phase difference φ2 of the second coil current crosses the second reference value φd for the second coil current (step S38: YES), the controller 15 causes the series of operations to come to an end.

### • Description of Second Example of Wireless Power Supply Method

A second example is similar to the second example of the wireless power supply method in the second embodiment. When the external sensor detects that a mobile object approaches the second coil 32 substantially close enough to enable the detection of the phase difference, the power source amplifier 13 starts outputting a small amount of electric power.

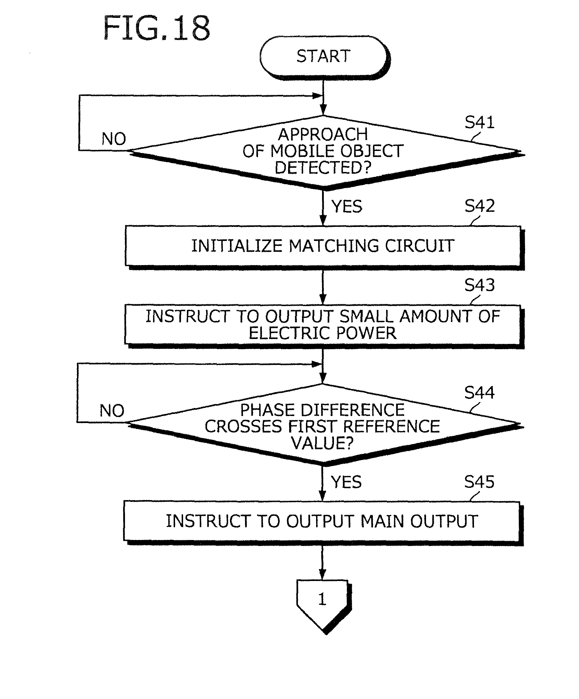

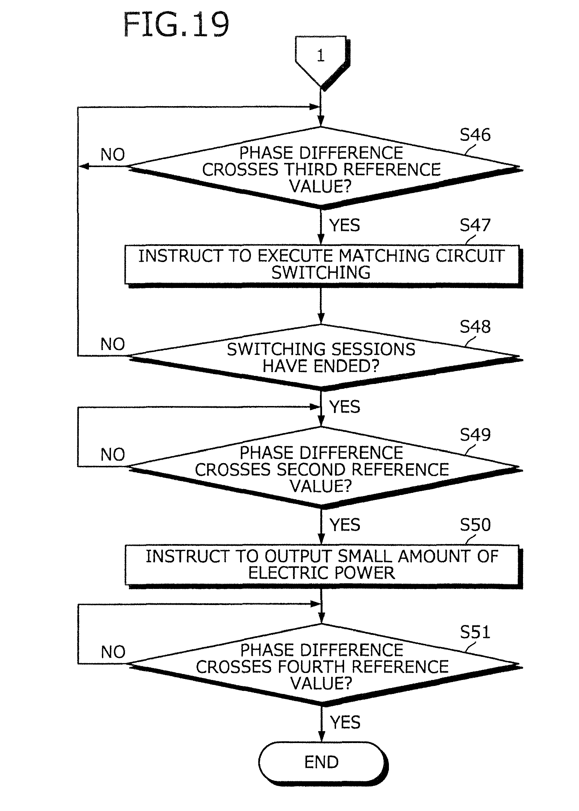

FIGs. 18 and 19 are flowcharts of a second example of the wireless power supply method according to the third embodiment. FIG. 19 depicts a portion continued from that of FIG. 18. As depicted in FIGs. 18 and 19, after the wireless power supply apparatus 12 starts the wireless power supply process, the wireless power supply apparatus 12 stands by until the external sensor detects the approach of a mobile object (step S41: NO). When the external sensor detects the approach of a mobile object (step S41: YES), the controller 15 executes the operations at steps S31 to S38 (steps S42 to S49).

When the phase difference φ1 of the first coil current crosses the second reference value φb for the first coil current, or the phase difference φ2 of the second coil current crosses the second reference value φd for the second coil current (step S49: YES), the controller 15 executes the operations at steps S26 and S27 (steps S50 and S51) and causes the series of operations to come to an end.

According to the third embodiment, the same effect as that of the second embodiment can be achieved. According to the third embodiment, the impedance matching is established by executing the switching by the matching circuit 71 corresponding to the phase difference φ1 of the first coil current or the phase difference φ2 of the second coil current. Therefore, unnecessary reflected power can be suppressed.

### EXPLANATIONS OF LETTERS OR NUMERALS

- 1, 11: wireless power supply system
- 2, 12: wireless power supply apparatus
- 3, 13: power supplying unit
- 4, 14: detecting unit
- 5, 15: control unit
- 6, 31, 32: power transmission coil
- 7, 41, 42: power reception coil

## Claims

1. A wireless power supply apparatus comprising:
a power supplying unit that supplies electric power to a power transmission coil at a resonance frequency at which magnetic field resonance is generated between the power transmission coil and a power reception coil, the power transmission coil sending out electric power as magnetic field energy, using the magnetic field resonance;
a detecting unit that detects a phase difference of current flowing in the power transmission coil for voltage applied to the power transmission coil; and
a control unit that switches an amount of the electric power supplied by the power supplying unit, based on the phase difference.

2. The wireless power supply apparatus according to claim 1, wherein
the control unit, when the phase difference reaches a first reference value, causes the amount of the electric power to be larger than that used before the phase difference reaches the first reference value and, when the phase difference reaches a second reference value, the control unit causes the amount of the electric power to be smaller than that used before the phase difference reaches the second reference value or suspends the supply of the electric power.

3. The wireless power supply apparatus according to claim 2, wherein
the first and the second reference values are each set based on a transmission efficiency of electric power transmitted from the power transmission coil to the power reception coil.

4. The wireless power supply apparatus according to any one of claims 1 to 3, wherein
the power transmission coil includes:
a first coil to which electric power is supplied from the power supplying unit, and
a second coil that sends out to the power reception coil by the magnetic field resonance, electric power supplied from the first coil by electromagnetic induction generated between the first and the second coils, and
the detecting unit detects a phase difference for the voltage applied to the power transmission coil, from at least any one among current flowing in the first coil and current flowing in the second coil.

5. A wireless power supply system comprising:
a power transmission coil that sends out electric power as magnetic field energy, using magnetic field resonance;
a power supplying unit that supplies electric power to a power transmission coil at a resonance frequency at which the magnetic field resonance is generated between the power transmission coil and a power reception coil;
a detecting unit that detects a phase difference of current flowing in the power transmission coil for voltage applied to the power transmission coil; and
a control unit that switches an amount of the electric power supplied by the power supplying unit, based on the phase difference.

6. The wireless power supply system according to claim 5, wherein
the control unit, when the phase difference reaches a first reference value, causes the amount of the electric power to be larger than that used before the phase difference reaches the first reference value and, when the phase difference reaches a second reference value, the control unit causes the amount of the electric power to be smaller than that used before the phase difference reaches the second reference value or suspends the supply of the electric power.

7. The wireless power supply system according to claim 6, wherein
the first and the second reference values are each set based on transmission efficiency of electric power transmitted from the power transmission coil to the power reception coil.

8. The wireless power supply system according to any one of claims 5 to 7, wherein
the power transmission coil includes:
a first coil to which electric power is supplied from the power supplying unit; and
a second coil that sends out to the power reception coil by the magnetic field resonance, electric power supplied from the first coil by electromagnetic induction generated between the first and the second coils, and
the detecting unit detects a phase difference for the voltage applied to the power transmission coil, from at least any one among current flowing in the first coil and current flowing in the second coil.

9. The wireless power supply system according to claim 5, further comprising
the power reception coil to which electric power is transmitted from the power transmission coil by the magnetic field resonance generated between the power transmission coil and the power reception coil.

10. A wireless power supply method comprising:
supplying electric power to a power transmission coil at a resonance frequency at which magnetic field resonance is generated between the power transmission coil and a power reception coil, the power transmission coil sending out electric power as magnetic field energy, using the magnetic field resonance;
detecting a phase difference of current flowing in the power transmission coil for voltage applied to the power transmission coil; and
switching an amount of the electric power supplied to the power transmission coil, based on the phase difference.

11. The wireless power supply method according to claim 10, further comprising:
increasing, when the phase difference reaches a first reference value, the amount of the electric power to be larger than that used before the phase difference reaches the first reference value; and
decreasing, when the phase difference reaches a second reference value, the amount of the electric power to be smaller than that used before the phase difference reaches the second reference value or suspending the supply of the electric power.

12. The wireless power supply method according to claim 11, wherein
the first and the second reference values are each set based on a transmission efficiency of electric power transmitted from the power transmission coil to the power reception coil.

13. The wireless power supply method according to any one of claims 10 to 12, wherein
the power transmission coil includes:
a first coil to which electric power is supplied, and
a second coil that sends out to the power reception coil by the magnetic field resonance, electric power supplied from the first coil by electromagnetic induction generated between the first and the second coils, and
the detecting includes detecting a phase difference for the voltage applied to the power transmission coil, from at least any one among current flowing in the first coil and current flowing in the second coil.
